## Europäisches Patentamt
## European Patent Office
## Office européen des brevets

(19)

(11) Numéro de publication: **0 188 149**
**B1**

(12)

# FASCICULE DE BREVET EUROPEEN

(45) Date de publication du fascicule du brevet:
**09.12.87**

(51) Int. Cl.⁴: **F 01 C 19/08,** F 16 J 15/02

(21) Numéro de dépôt: **85402440.3**

(22) Date de dépôt: **09.12.85**

(54) Joint d'étanchéité et son application à la réalisation de la compensation hydrostatique de pompes et moteurs hydrauliques.

(30) Priorité: **10.12.84 FR 8418837**

(43) Date de publication de la demande:
**23.07.86 Bulletin 86/30**

(45) Mention de la délivrance du brevet:
**09.12.87 Bulletin 87/50**

(84) Etats contractants désignés:
**AT BE CH DE GB IT LI LU NL SE**

(56) Documents cités:
**DE - A - 1 553 262**
**FR - A - 2 110 899**
**FR - A - 2 434 264**
**FR - A - 2 543 229**
**GB - A - 2 051 241**
**GB - A - 2 051 241**

**E. SCHMID: "Handbuch der Dichtungstechnik", 1981,
pages 194-195, Expert Verlag, Grafenau/Württemberg,
DE;**

**Le dossier contient des informations techniques
présentées postérieurement au dépôt de la demande et
ne figurant pas dans le présent fascicule.**

(73) Titulaire: **HYDROPERFECT INTERNATIONAL HPI,
Z.I., 26 rue Condorcet, F-94430 Chennevieres Val de
Marne (FR)**

(72) Inventeur: **Laumont, Roger, 24 Promenade des Anglais,
F-94210 La Varenne Saint Hilaire (FR)**

(74) Mandataire: **Madeuf, Claude Alexandre Jean et al,
CABINET MADEUF 3, avenue Bugeaud, F-75116 Paris
(FR)**

ACTORUM AG

## Description

La présente invention concerne un nouveau joint destiné essentiellement à assurer l'étanchéité entre des pièces mobiles.

L'invention trouve une application particulièrement intéressante pour assurer l'étanchéité des chambres de compensation hydrostatique qui sont prévues dans des pompes et moteurs hydrauliques à engrenages dans lesquels des coussinets doivent être maintenus constamment appliqués contre les faces latérales des pignons.

Dans cette technique, on utilise jusqu'à présent des joints toriques qui sont légèrement comprimés lorsque l'espace séparant les deux pièces est le plus large. Il résulte de cela que le joint est déformé lorsque l'espace séparant les deux pièces est réduit, par exemple du fait de la dilatation desdites pièces, ce qui a pour effet que la surface d'application du joint varie très sensiblement.

Il a été constaté que les variations de surface d'appui nuisent à l'étanchéité et, par conséquent, au rendement des pompes et moteurs hydrauliques.

Par ailleurs, le joint tend quelquefois à fluer entre les deux pièces, ce qui constitue un inconvénient grave.

Pour le pallier, la Demanderesse a décrit dans son brevet français FR-A-2543229 des joints comportant des garnitures latérales en polyamide qui empêchent le fluage du joint dans l'espace séparant les deux pièces mobiles.

Il est apparu que cette disposition, également, mise en œuvre dans d'autres publications connues, par exemple dans le brevet français FR-A-2221019, n'était pas satisfaisante car la déformation du joint de forme approximativement torique a quelquefois pour effet d'écarter la garniture empêchant le fluage de sa position appropriée de sorte que l'étanchéité n'est plus assurée correctement.

La présente invention crée un nouveau joint qui offre différents avantages. En effet, la surface de la partie travaillante du joint est constante quelle que soit la variation de l'épaisseur de l'espace séparant les deux pièces et quelles que soient les tolérances de fabrication; la force due à la compression du joint réalisé en élastomère est constante quelle que soit la variation du serrage. De plus, on réalise un rattrapage de jeu automatique de la garniture anti-extrusion empêchant le fluage dont le joint peut être muni.

Conformément à l'invention, le joint d'étanchéité destiné à être disposé dans une rainure d'une pièce séparée d'une seconde pièce par un espace est caractérisé en ce qu'il présente une section sensiblement rectangulaire, des moyens étant prévus pour le maintenir appliqué contre le fond de la rainure et contre l'un des côtés latéraux de cette rainure de façon qu'il s'étende à travers l'espace et prenne constamment appui de façon élastique contre la seconde pièce par l'un des petits côtés du rectangle qu'il délimite.

Diverses autres caractéristiques de l'invention ressortent d'ailleurs de la description détaillée qui suit.

Une forme de réalisation de l'objet de l'invention est représentée, à titre d'exemple non limitatif, au dessin annexé.

La fig. 1 est une coupe transversale d'une pompe ou moteur hydraulique à engrenages d'un type faisant application de l'invention.

La fig. 2 est une coupe vue sensiblement suivant la ligne II-II de la fig. 1.

La fig. 3 est un plan, à plus grande échelle, d'un des joints apparaissant à la fig. 2.

La fig. 4 est un plan, à plus grande échelle, d'un autre des joints apparaissant à la fig. 2.

La fig. 5 est une coupe vue suivant la ligne V-V des figures 3 et 4 lorsque le joint est en place, comme illustré par la fig. 2.

La fig. 6 est une coupe analogue à la fig. 5 du même joint, mais vue suivant la ligne VI-VI de la fig. 3 ou de la fig. 4.

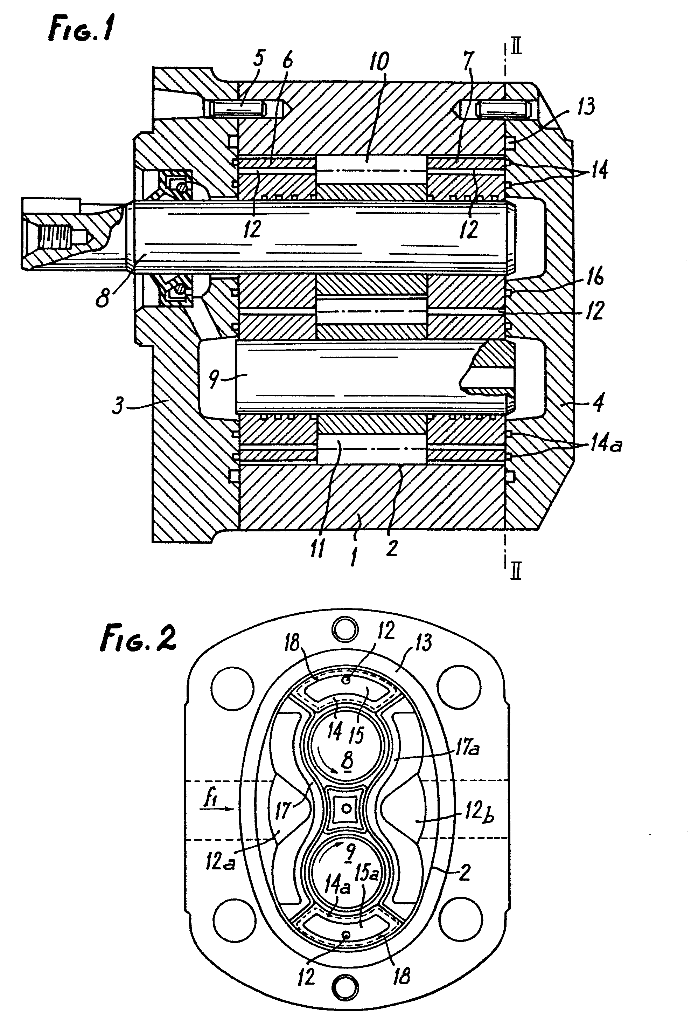

Les figures 1 et 2 illustrent une pompe hydraulique à engrenages qui est constituée pour pouvoir fonctionner dans l'un et l'autre des deux sens de rotation possibles. Tout ce qui suit s'applique de la même façon à un moteur hydraulique et, le cas échéant, à une pompe ou à un moteur hydraulique destiné à fonctionner seulement dans un seul sens de rotation. La différence essentielle existant avec la pompe décrite réside dans la conformation différente que présenteraient alors les chambres ou espaces dits de compensation.

La pompe comporte un corps 1 délimitant une cavité 2 de forme ovoïde.

Le corps 1 est fermé sur chacun de ses deux côtés par des couvercles 3, 4 qui y sont reliés par des pions de centrage 5.

La cavité 2 contient des coussinets ou paliers 6, 7 pouvant coulisser à frottement doux. Les coussinets 6, 7 supportent des arbres 8 et 9 sur lesquels sont calés des pignons 10 et 11.

Dans l'exemple décrit, l'arbre 8 constitue l'arbre menant et fait saillie du couvercle 3 tandis que l'arbre 9 est complètement inclus à l'intérieur de la pompe.

Pour que les coussinets 6 et 7 soient toujours maintenus appliqués contre les faces latérales des pignons 10, 11, des conduits 12 traversent ces coussinets pour mettre en communication les entredents des pignons 10, 11 avec l'espace de très faible épaisseur existant entre les coussinets et les couvercles 3, 4.

De même, si l'on considère le sens de circulation du liquide de travail illustré par la flèche $f_1$ de la fig. 2, les conduits d'admission 12a et de refoulement 12b sont également mis en communication avec l'espace compris entre les couvercles et les paliers.

Chaque espace dit de compensation compris entre chaque coussinet et chaque couvercle correspondant est délimité et isolé par des joints pour correspondre aux zones de pressions différentes.

Le dessin montre une rainure annulaire 13 pour un joint d'étanchéité interposé respectivement entre les couvercles 3, 4 et le corps 1.

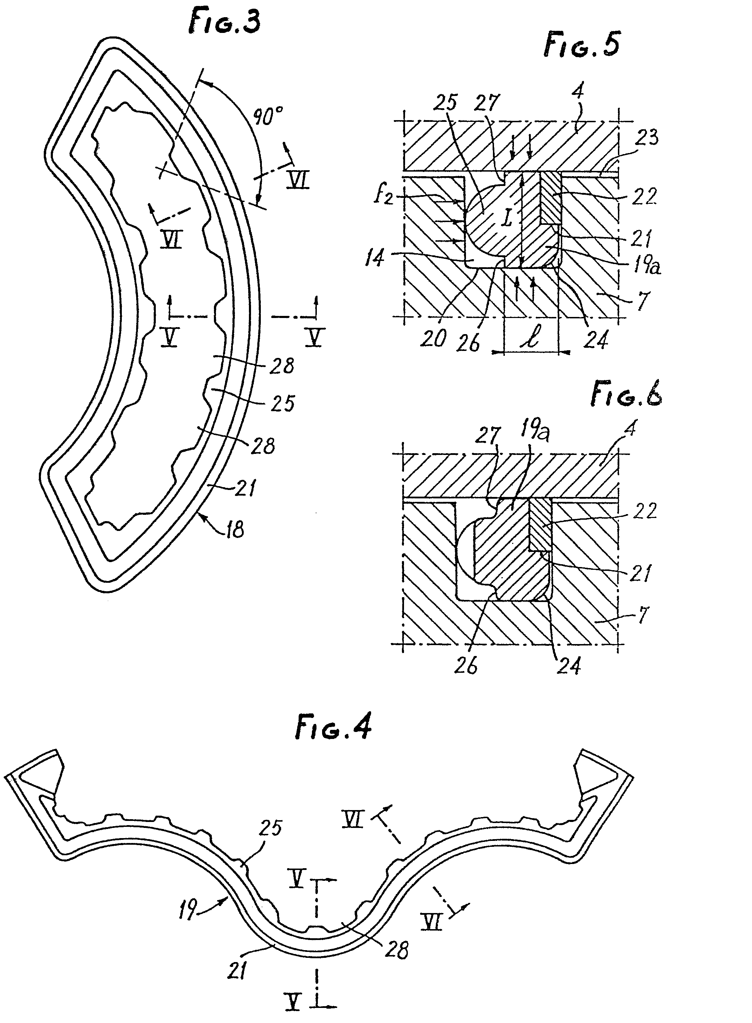

De même, des rainures 14, 14a pour des joints, comme celui illustré à la fig. 3, sont prévues pour délimiter des chambres de compensation supérieures et inférieures 15, 15a tandis qu'une rainure 16 délimite une chambre médiane et que des rainures 17, 17a servent de logement à des joints, comme ceux de la fig. 4, pour des zones de compensation d'admission et de refoulement.

Tous les joints destinés à être mis en place dans les différentes rainures décrites ci-dessus présentent la même configuration mais leur forme générale est évidemment adaptée à celle des rainures.

Ainsi, comme l'illustre la fig. 3, le joint 18 destiné à être mis en place dans chacune des rainures 14, 14a est conformé sensiblement comme un arc circulaire tandis que le joint 19, représenté à la fig. 4, est destiné à être mis en place dans les rainures 17, 17a présente sensiblement la forme de la lettre Ω.

Chaque joint est réalisé par moulage, par exemple en élastomère, et présente en section la configuration illustrée par les figures 5 et 6.

Comme cela est illustré par ces figures, le joint présente en section la forme générale d'un rectangle désigné par 19a, dont la largeur $l$ est constante sur toute sa longueur.

La longueur $L$ du rectangle correspond au moins à la distance maximale qui peut exister entre le fond 20 de la rainure, par exemple la rainure 14, dans lequel il est disposé.

Une saignée longitudinale 21 est prévue sur toute la longueur du bord supérieur externe du joint, comme le montrent les figures 3 à 6.

La saignée 21 est destinée à recevoir une baguette anti-extrusion 22, par exemple réalisée en résine polyamide, et qui est destinée à empêcher tout fluage du joint dans l'espace 23 séparant le coussinet, par exemple le coussinet 7 du couvercle 4.

L'angle inférieur de la partie rectangulaire 19a du joint est arrondi, comme montré en 24, afin que le grand côté extérieur et le petit côté inférieur portent respectivement contre la face latérale et le fond de la rainure 14, ce qui a pour effet que le dessus plat formant l'un des petits côtés du rectangle porte lui-même de façon régulière contre la face du couvercle 4.

Des bossettes 25 sont prévues de place en place sur le côté interne du joint pour prendre appui en exerçant une légère pression contre le côté latéral interne de la rainure 14.

Les bossettes laissent libres des segments 26, 27 du grand côté de la partie rectangulaire 19a pour que lesdites bossettes ne puissent en aucun cas venir en contact, soit avec le fond 20 de la rainure, soit avec la surface du couvercle 4.

Comme l'illustre la fig. 3, il est avantageux que les flans latéraux des bossettes forment entre eux un angle d'environ 90° afin que les bossettes prennent appui contre la face latérale interne de la rainure, seulement par une faible longueur.

Comme cela ressort de ce qui précède, la pression due au fluide hydraulique s'exerce sur le joint dans les chambres de compensation, dans le sens des flèches $f_2$ (fig. 5). Ce fluide hydraulique a pour effet d'appliquer la partie rectangulaire contre le côté latéral externe de la rainure 14 et, par conséquent, de serrer la baguette anti-extrusion contre cette face de la rainure et contre la face en regard du couvercle 4.

Si l'espace 23 tend à être réduit, il en résulte une déformation de la partie rectangulaire qui tend à modifier la forme du joint étant donné l'incompressibilité de la matière qui le constitue. Cette modification de forme est répartie dans les alvéoles 28 qui séparent les bossettes 25 et intéresse éventuellement aussi la partie arrondie 24, mais n'a pas pour effet de modifier la largeur $l$ de la partie rectangulaire du joint de sorte que les surfaces en contact demeurent constantes sur toutes les zones devant être rendues étanches, puisque les faces d'appui du joint présentent une surface constante indépendante du serrage.

Il est avantageux que la longueur $L$ de la partie rectangulaire soit telle que le joint exerce toujours une force d'appui minime, même lorsque la pompe n'est pas en fonctionnement, ce qui a pour effet de maintenir les coussinets correctement en appui contre les faces latérales des pignons et ce qui assure une compensation des tolérances de fabrication et, par conséquent, une très bonne étanchéité entre les différentes zones de compensation, tant à l'arrêt que pendant le fonctionnement de la pompe.

## Revendications

1. Joint d'étanchéité destiné à être disposé dans une rainure (14) d'une pièce (7) séparée d'une seconde pièce (4) par un espace (23), une baguette anti-extrusion (22) étant insérée dans une saignée (21) du joint pour prendre appui contre un côté latéral de la rainure (20) et contre la seconde pièce (4), caractérisé en ce qu'il présente une section sensiblement rectangulaire, des moyens étant prévus pour le maintenir appliqué contre le fond (20) de la rainure (14) et contre l'un des côtés latéraux de cette rainure de façon qu'il s'étende à travers l'espace (23) et prenne constamment appui de façon élastique contre la seconde pièce (4) par l'un des petits côtés de largeur $l$ du rectangle qu'il délimite, les moyens maintenant la partie de section rectangulaire (19) contre l'une des faces latérales de rainure (14) étant constitués par des bossettes (25) séparées par des alvéoles (28) et prenant appui sur un côté latéral de la rainure (14) sans prendre appui sur le fond de cette rainure ni sur la seconde pièce (4) et les moyens assurant le maintien de la baguette anti-extrusion (22) et de l'un des côtés de la partie rectangulaire (19a) du joint contre une face latérale de la rainure (14) étant constitués par un fluide hydraulique sous pression.

2. Joint d'étanchéité suivant la revendication 1, caractérisé en ce que le côté de la partie rectangulaire (19a) prenant appui contre la face latérale de la rainure (14) est relié au petit côté prenant appui contre le fond (20) par un arrondi (24).

3. Joint d'étanchéité suivant l'une des revendications 1 ou 2, caractérisé en ce que les côtés latéraux des bossettes (25) forment entre eux un angle voisin de 90°.

4. L'application du joint de l'une des revendications précédentes à la réalisation de l'étanchéité de chambre de compensation hydrostatique dans des pompes et moteurs hydrauliques à engrenages, ledit joint étant disposé dans des rainures (14, 14a, 17, 17a) prévues au moins entre des couvercles (3, 4) et des coussinets (6, 7), le joint étant disposé dans lesdites rainures pour que les bossettes qu'il présente soient tournées du côté sur lequel s'exerce la presse hydraulique de compensation.

## Claims

1. Sealing gasket provided to be placed in a groove (14) of a part (7) distant from a second part (4) by a space (23), an anti-extrusion rod (22) being inserted in a cut (21) of the gasket for bearing against a lateral side of the groove (20) and against the part (4), characterized in that it has a substantially rectangular cross-section, means being provided for maintaining it applied against the bottom (20) of the groove (14) and against one of the lateral sides of this groove so that it will extend through the space (23) and constantly bear in a resilient manner against the second part (4) by one of the small sides of a width *l* of the rectangle that it delimits, the means maintaining the part of a rectangular cross-section (19a) against one of the lateral surfaces of the groove (14) being formed by small bosses (25) separated by cells (28) and bearing on a lateral side of the groove (20) without bearing on the bottom of this groove or on the second part (4), and the means providing the maintenance of the anti-extrusion rod (22) and of one of the sides of the rectangular part (19a) of the gasket against a lateral surface of the groove (14) being made by a pressurized hydraulic fluid.

2. Sealing gasket according to claim 1, characterized in that the side of the rectangular part (19a) bearing against the lateral surface of the groove (14) is connected to the small side bearing against the bottom (20) by a rounded part (24).

3. Sealing gasket according to one of claims 1 or 2, characterized in that the lateral sides of the small bosses (25) form together an angle near of 90°.

4. The application of the gasket of one of the preceding claims to realizing the sealing of hydrostatic compensation chamber in hydraulic gear pumps and motors, said gasket being placed in grooves (14, 14a, 17, 17a) provided at least between the covers (3, 4) and bearings (6, 7), the gasket being placed in said grooves so that the small bosses that it has will be facing the side on which is exerted the compensation hydraulic pressure.

## Patentansprüche

1. Dichtung, die dazu bestimmt ist, in eine Nut (14) eines Werkstücks (7) eingesetzt zu werden, das von einem zweiten Werkstück (4) durch einen Zwischenraum (23) getrennt ist, wobei eine das Kaltfliesspressen verhindernde Leist (22) in eine Ausnehmung (21) der Dichtung eingesetzt wird, so dass sie sich an einer Seitenwand der Nut (20) und am Werkstück (4) abstützt, dadurch gekennzeichnet, dass sie einen in wesentlichen rechteckigen Querschnitt aufweist, wobei Mittel vorgesehen sind, durch welche die Dichtung gegen den Boden (20) der Nut (14) und gegen eine Seitenwand der Nut gedrückt wird, damit sie sich durch den Zwischenraum (23) erstreckt und sich stets federnd am zweiten Werkstück (4) über eine der kleineren Seiten, mit der Länge *l*, des von ihr begrenzten Vierecks abstützt, wobei die Mittel die den rechteckigen Querschnitt aufweisenden Bereich (19) in Berührung mit einer Seitenwand der Nut (14) festhalten, aus Vorsprügen (25) bestehen, die durch Höhlen (28) voneinander getrennt werden und sich an einer Seitenwand der Nut (20) abstützen, ohne sich am Boden dieser Nut bzw. gegen das zweite Werkstück (4) abzustützen und die Mittel, welche die das Kaltfliesspressen verhindernde Leiste (22) und eine der Seitenwände des rechteckigen Bereichs (19) der Dichtung in Berührung mit einer Seitenwand der Nut (14) festhalten, aus einem hydraulischen, unter Druck stehenden Fluid bestehen.

2. Dichtung nach Anspruch 1, dadurch gekennzeichnet, dass die Seitenwand des rechteckigen Bereichs (19) das sich an der Seitenwand der Nut (14) abstützt, mit der kleineren, sich am Boden (20) abstützenden Seite, über einen runden Bereich (24) verbunden ist.

3. Dichtung nach einem der Ansprüche 1 oder 2, dadurch gekennzeichnet, dass die Seitenwände der Vorsprünge (25) zwischen sich einen Winkel von etwa 90° einschliessen.

4. Anwendung der Dichtung nach einem der Ansprüche 1 bis 3, zur Erzielung der Dichtigkeit von hydrostatischen Ausgleichkammern in hydraulischen, mit Getrieben versehenenen Pumpen und Motoren, wobei die Dichtung in Nuten (14, 14a, 17, 17a) eingesetzt wird, die mindestens zwischen Deckeln (3, 4) und Lagern (6, 7) angeordnet sind, und die Dichtung so in die Nuten eingesetzt wird, dass ihre Vorsprünge zur Seite zugewandt sind, auf welche der hydraulische Ausgleichdruck ausgeübt wird.

**Fig.1**

**Fig.2**

Fig.3

90°

28
25
28
21
18

Fig.5

25  27        4
23
$f_2$         22
L         21
14        19a
7
20  26    $\ell$    24

Fig.6

27  19a    4
22
21
7
26        24

Fig.4

25
VI
V
VI
19
28
21
V